# EUROPEAN PATENT SPECIFICATION

(11) **EP 0 442 379 B1**
(45) Date of publication and mention of the grant of the patent: **11.01.1995**
(21) Application number: 91101666.5
(22) Date of filing: 07.02.1991
(51) Int. Cl.: B65D 47/18, B65D 35/52, B65D 35/50, B29C 43/18

(54) **A stopper for deformable containers, incorporating an elastic diaphragm dispenser with a self-closing orifice, and method for the manufacture thereof**
Stopfen für mit einem elastischen Membranspender mit selbstschliessender Mündung versehene verformbare Behälter und Methode zum Herstellen desselben
Un bouchon pour récipients déformables comportant un distributeur à diaphragme élastique avec un orifice à fermeture automatique et méthode pour sa fabrication

(30) Priority: 14.02.1990 IT 1936990
(43) Date of publication of application: 21.08.1991
(73) Proprietor: GUALA S.p.A., I-15100 Alessandria (IT)
(72) Inventor: Battegazzore, Piero, I-15100 Alessandria (IT)
(74) Representative: Perani, Aurelio

(56) References cited:
- EP-A- 0 160 336
- EP-A- 0 278 125
- EP-A- 0 395 380
- EP-A- 0 405 472
- CH-A- 577 414

## Description

This invention relates to a stopper for deformable containers provided with a neck portion defining an opening, being of a type formed as by molding from a plastics material with a top wall and a tubular wall depending therefrom for engagement with the container neck, said top wall being connected to the tubular wall by reversible coupling means, including a dispensing device in the form of an elastic diaphragm with at least one cross cut to provide a self-closing orifice which will open to dispense a product from the container interior on a predetermined pressure being applied to the container from outside, and close to automatically cut off the product delivery on such pressure being removed, said top wall of the stopper providing a temporary cover element for the dispensing device.

A stopper of the type specified hereinabove is disclosed in EP-A-0 160 336, for example, while the use and operation of diaphragm-type dispensing devices having a cross cut which opens to dispense out the product on the container walls being applied a compressive force from outside, as in the instance of a toothpaste tube, and automatically closes on removal of the externally applied compressive force, are also disclosed and illustrated in FR-A-996,998 and US-A-4,434,810. According with the documented prior art, it may be seen that the diaphragm with the cross cut which constitutes the self-closing dispensing member is provided on the stopper as a separate part to be first formed separately and then assembled to the unit forming the container closure. With specific reference to EP-A-0 160 336, it may be further seen that the elastic diaphragm constituting the self-closing dispensing member, also requires co-operation from the end of the container neck in order to be held in a working position, as well as co-operation from the other parts which constitute the stopper proper, such as the neck-engaging tubular wall and the top wall intended for removal and providing a temporary cover for the underlying diaphragm.

With reference to US-A-4,434,810, on the other hand, it may be seen that, while requiring no assistance from elements or parts of the container for holding it in a working position, the diaphragm functioning as a self-closing dispenser is again formed as a separate part from the stopper and then fitted to the stopper top wall within a specially provided seating arrangement and using coupling means which require the provision of corresponding complementary means on the diaphragm edges.

Thus, the diaphragm should be formed of necessity by a molding process in purposely arranged molds, which are relatively complicated, and using plastics materials which can acquire and retain complex structural characteristics, usually of the thermosetting variety.

Accordingly, the prior art exhibits a number of drawbacks, among which the use of relatively expensive materials, as are the thermosetting ones, the need to make specific molds available for forming the diaphragm as a separate part, the need to assemble the diaphragm and the stopper together, which all are bound to be cost-intensive when related to the particular type of end product of interest.

It is the object of this invention to eliminate or greatly eliminate the above drawbacks with which prior art stoppers are beset by providing a structure and manufacturing method whereby, on the one side, the self-closing diaphragm-type dispensing member can be formed directly on the stopper, and on the other side, more economical plastics materials can be used.

This object is achieved by a stopper as indicated being characterized as in Claim 1, and by a manufacturing method as defined in Claim 11.

The invention will be now described more in detail with reference to some practical embodiments thereof, given by way of non-limitative example and illustrated by the accompanying drawings, where:
Figure 1 a part-sectional perspective view of a first embodiment of a stopper according to the invention;
Figure 2 is a part-sectional perspective view of a second embodiment of the inventive stopper;
Figure 3 is a part-sectional perspective view of a third embodiment of the inventive stopper;
Figure 4 is a perspective view showing schematically the stopper of this invention fitted to a deformable container under dispensing conditions of a product present in the container;
Figure 5 shows the stopper of Figure 4 with the dispenser in the closed condition;
Figure 6 is a plan view showing schematically the stopper interior prior to commencing the elastic diaphragm manufacturing steps in accordance with the method of this invention; and
Figures 7, 8, 9, 10 and 11 show steps of the elastic diaphragm manufacturing method.

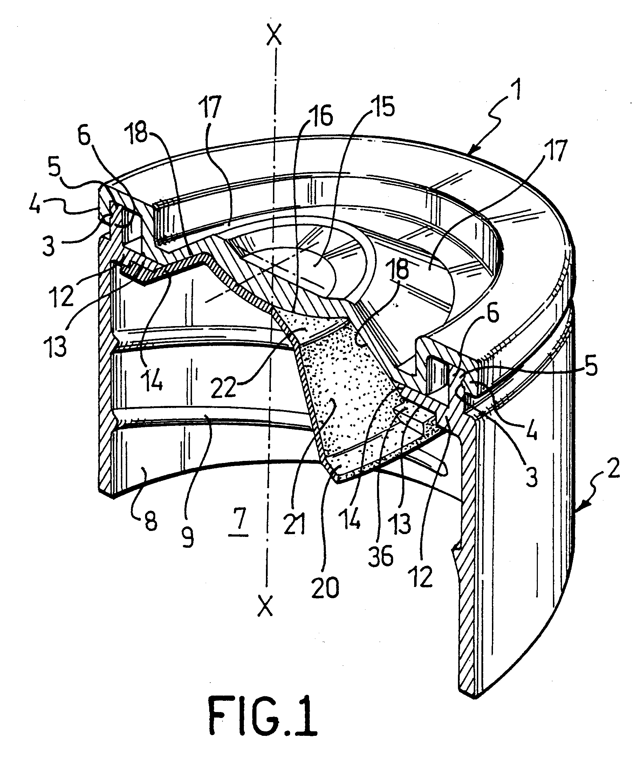

With reference to the drawing figures, and specifically to Figure 1, it may be seen that this stopper comprises a top wall 1 and a tubular wall 2 connected to the former by reversible coupling means consisting, in the example shown, of a toroidal projection 3 carried on the bent lip 4 of the wall 1 and a mating slot 5 provided on an annular ridge 6 of the tubular wall 2. The walls 1 and 2 define, when coupled together, an internal cavity 7 having a longitudinal axis X-X. The inner surface 8 of the tubular wall 2 is provided with some conventional means, e.g. a threadway 9, for engagement with the neck portion 10 of a container 11.

The container to which this invention is related would be of the "squeeze" type, such as a toothpaste tube, or of the deformable type by application of an external compressive force but capable of recovering elastically its original shape on removal of the compressive force.

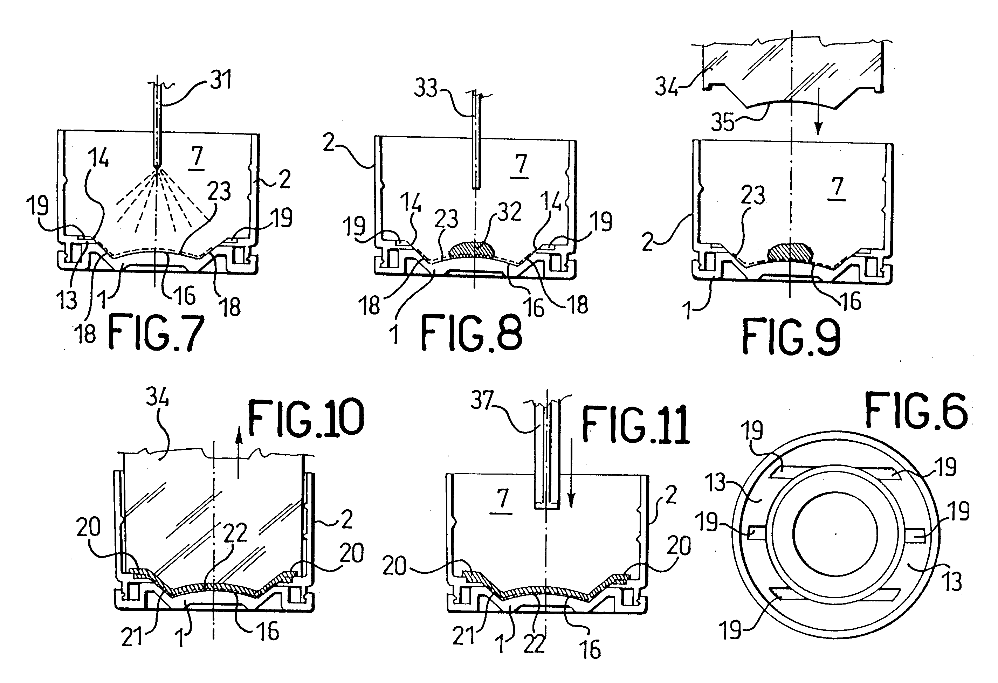

The tubular wall 2 is also provided, at a location close to the top wall 1, with a flange 12 which includes a horizontal section 13 extending perpendicularly to the axis X-X and an end section 14 which defines a conical surface tapering toward the top wall 1. The latter has a central portion 15 whose surface 16, facing the cavity 7, is convex, and an annular region 17 whose surface 18, also facing toward the cavity 7, is frusto-conical and lies in continuation of the conical surface to which the end section 14 of the flange 12 belongs. As shown best in Figure 6, the horizontal section 13 of the flange 12 has circumferentially arranged cuts 19 effective to provide stable and irreversible anchoring for the edge 20 of the elastic diaphragm 21 during its manufacture, which diaphragm will constitute, in the stopper environment, the self-closing dispensing member, as explained hereinafter.

This elastic diaphragm 21 has a central region 22 which is to bear on the convex surface 16 of the top wall 1 in a detachable manner. To promote the detach action, between the convex surface 16 and the region 22 of the diaphragm 21 there may be inserted an anti-adhesion material 23, such as silicone, as shown in Figures 7 to 11.

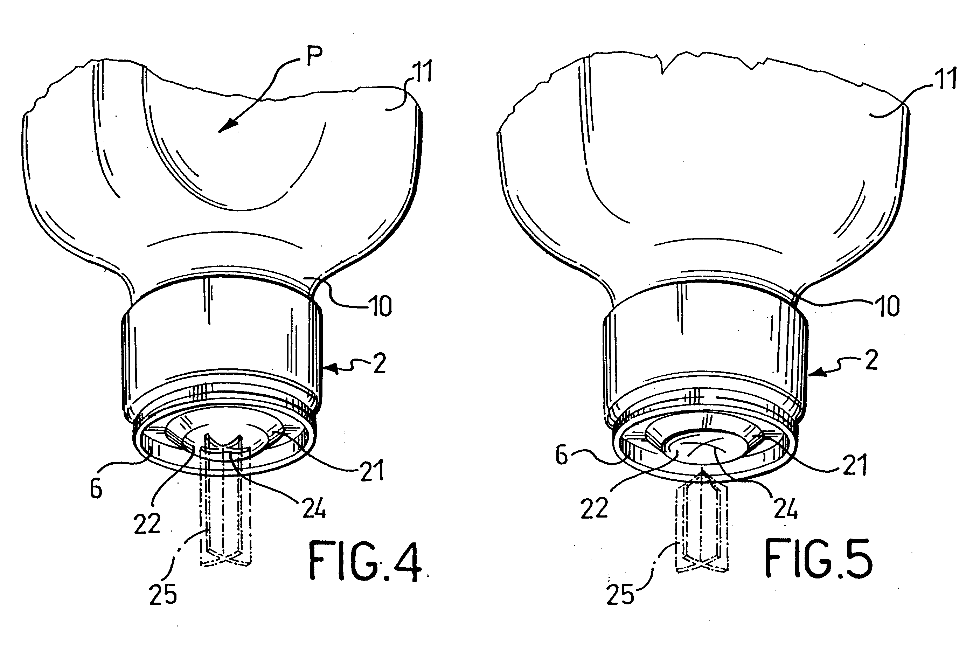

With particular reference to Figures 4 and 5, it may be seen that this diaphragm 21is provided, in its central region 22 with a cross-like cut 24. This provides a self-closing orifice which opens to deliver the product 25, such as a toothpaste, as an external pressure P is applied, as shown in Figure 4, to the deformable container 11, and closes automatically, to cut off the delivery of product, on removal of the external pressure, while depending on the elastic or inelastic character of the container 11, the container may recover its original spatial configuration.

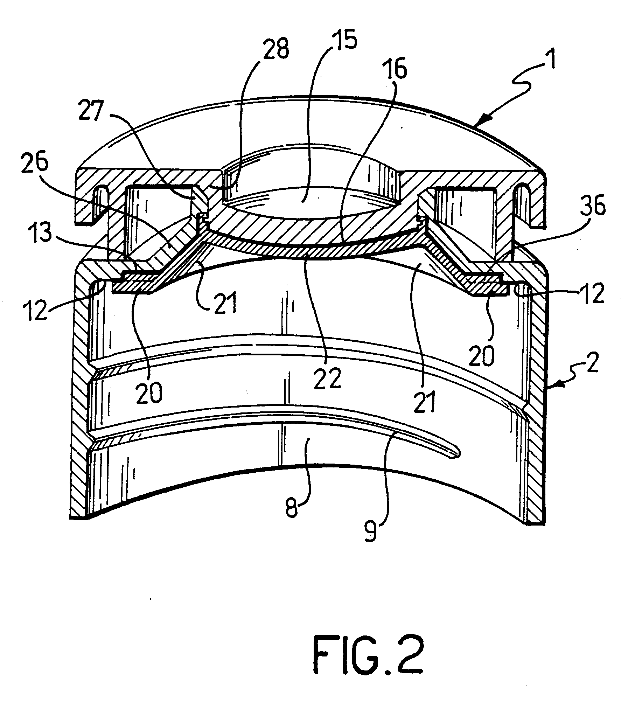

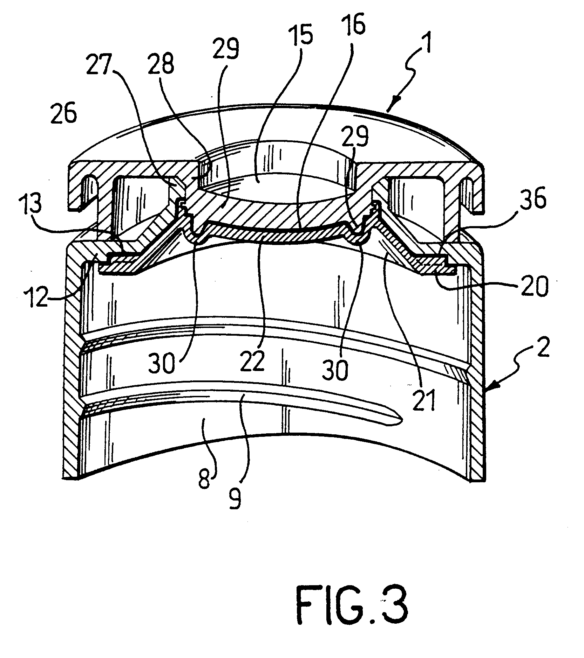

With reference to Figures 2 and 3, it may be seen that homolgous parts of those previously described with reference to Figure 1, carry the same reference numerals, particularly as relates to the top 1 and tubular 2 walls. In accordance with the embodiment shown in Figure 2, the flange 12 has, additionally to the flat section 13 with the cuts 19, an intermediate section 26 which belongs to a conical surface tapering toward the top wall 1 of the stopper, followed by a tubular end section 27. The last-named section is coaxial with the tubular wall 2 but has a smaller diameter. It fits in reversible coupling relationship with a collar 28 which encircles the central region of the wall 1 whose inner surface 16 is convex like in the embodiment of Figure 1. This same tubular section 27 may, with the wall 1 removed and the stopper in the operative condition on a container, function as a pouring attachment or lead-out for the product being dispensed, with clear benefits in the instance of the product being liquid or oil-like.

With reference to the embodiment shown in Figure 3, it may be seen that, compared with that of Figure 2, the central region of the wall 1 whose surface 16 facing the cavity 7 is convex, has been provided with an annular ridge 29 which mates with a groove 30 in the elastic diaphragm 21, which takes here the form and function of annular bellows. This is specially advantageous to accommodate shrinkage of the thermoplastic material consequent to forming the elastic diaphragm 21 by the molding process, as explained hereinafter.

Turning now to Figures 6 to 11, the method may be appreciated for manufacturing the dispenser member of the elastic diaphragm type with self-closing cut directly onto the stopper body, according to this invention.

First, the stopper assembly basic parts consisting of the top wall 1 and the tubular wall 2 is molded and assembled. The plastics material employed in the manufacture to such parts is preferably polypropylene of high-density polyethylene having a softening temperature in the 190 to 200 degrees centigrade range. The molding technologies are conventional ones for such materials. The assembly is then placed upside down with the cavity 7 opening up as shown schematically in Figure 7. The convex 16 and frusto-conical 18 surfaces of the top wall 1 are preferably coated or sprinkled, as by means of a device shown schematically at 31, with a thin coat 23 of silicone or, more generally, of some conventional adhesion-preventing material to avoid that the elastic diaphragm 21 may attach itself to the wall 1 in the process of its formation. As explained hereinafter, in fact, thin provides a temporary covering for the diaphragm intended for removal on first use of the container and the stopper. Thereafter, as shown in Figure 8, a metered amount of a thermoplastic elastomer 32 is deposited over the central region of the convex surface 16 in a flowing state which has a softening temperature in the 140 to 150 degrees centigrade range, to thereby avoid damaging the material of which the wall 1 is made. The metered amount 32 of elastomer, preferably comprising styrene butadiene, is applied of preference through a nozzle schematically indicated at 33. Once the deposition of the metered amount 32 of elastomer material is completed and the nozzle 33 moved aside, a punch 34 is brought into play which, as shown in Figures 9 and 10, will mold under compression the charge 32 and thereby form the diaphragm 21. During this molding stage, the cavity 7 of the stopper will practically act as a mold. The profile shapes of the inner surfaces of the wall 1, the flange 12, and 35 of the punch 34 will determine the final configuration of the diaphragm 21 in the embodiments shown, while also taking into account their respective shrinkage rates to occur during the cooling stage. Throughout the molding process, the punch 34 would be heated by conventional heater means, not shown, thereby the plastic elastomer material intended to provide the edge 20 for the diaphragm being formed will also flood the cuts 19 in the flange 12 to form peduncles such as the one shown at 36 in Figure 1 to provide mechanical anchoring as well as hydraulic sealing.

Once the formation of the elastic diaphragm 21 is completed, and after removal of the punch 34, in the central region of the diaphragm itself, at a juxtaposed location to the convex surface 16 of the wall 1, there is formed at least one cut-through adapted to provide a self-closing orifice. This cut-through may be in the shape of a cross 24, as shown in Figures 4 and 5, and is made using a specially provided shearing punch shown schematically at 37 in Figure 11.

At this point, after the punch 37 is retracted, the stopper is to be regarded as finished and ready for use in association with a container 11 for dispensing a liquid or pasty product in the way discussed hereinabove and with the advantages already set forth.

On first use, the top wall 1 would be detached from the tubular wall 2 by acting on the reversible coupling means. Thus, the central region 22 and respective cut-through 24 in the elastic diaphragm 21 become exposed, with the latter firmly and tightly anchored by its edge 20 on the flange 12 of the stopper tubular wall 2.

It will be appreciated from the foregoing description that, with this invention, the elastic diaphragm can be made to have a much smaller thickness dimension than that required where the diaphragm is manufactured as a separate item and then manipulated for assembling to the stopper. In addition, through it being practically formed integral with the tubular wall of the stopper, as the latter is screwed down onto the container, no strains are applied which may result in it becoming deformed, as is instead the case with diaphragms according to the prior art.

## Claims

1. A stopper for deformable containers provided with a neck portion defining an opening, being of a type formed as by molding from a plastics material with a top wall (1) and a tubular wall (2) depending therefrom for engagement with the container neck, said top wall being connected to the tubular wall by reversible coupling means, including a dispensing device in the form of an elastic diaphragm (21) with at least one cross cut to provide a self-closing orifice which will open to dispense a product from the container interior on a predetermined pressure being applied to the container from outside, and close to automatically cut off the product delivery on such pressure being removed, said top wall of the stopper providing a temporary cover element for the dispensing device, characterized in that said diaphragm (21) is permanently attached in tight relationship and irreversible manner by its peripheral edge (20) to a flange (12) provided on the interior of the stopper tubular wall (2) at the end thereof facing the top wall (1), and bears on the latter in a detachable manner.

2. A stopper according to Claim 1, characterized in that said elastic diaphragm is made of a thermoplastic elastomer having a softening temperature in the 140° to 150°C range.

3. A stopper according to Claim 2, characterized in that said thermoplastic elastomer is styrene butadiene.

4. A stopper according to Claims 1 to 3, characterized in that the top wall and adjoining tubular wall are formed from a thermoplastic polymer material having a softening temperature in the 190° to 200°C range.

5. A stopper according to Claim 4, characterized in that said polymer material is high-density polyethylene.

6. A stopper according to Claims 1 to 5, characterized in that the surface (16) of the central region (15) of said top wall (1) facing the interior of the cavity (7) defined by the tubular wall (2) connected thereto is a convex surface.

7. A stopper according to claims 1 to 6, characterized in that said flange (12) for irreversible tight attachment of the edge (20) of said diaphragm (21) comprises a substantially flat annular section (13) lying perpendicularly to the longitudinal axis (X-X) of the tubular wall (2) and provided with a plurality of circumferentially arranged cuts (19) and an end section (14) which belongs to a conical surface tapering toward said top wall (1).

8. A stopper according to Claims 1 to 7, characterized in that said top wall has a frusto-conical annular region (17) which, with the wall in the coupled condition with the tubular wall (2), extends in continuation of the conical surface of said end section (14) of the flange along the taper direction.

9. A stopper according to Claims 1 to 6, characterized in that said flange for irrevrsible tight attachment of the edge (20) of said diaphragm comprises a substantially flat annular section (13) lying perpendicular to the longitudinal axis (X-x) of the tubular wall and being provided with a plurality of circumferentially arranged cuts (19), an intermediate section (26) belonging to a conical surface tapering toward said top wall (1) and a tubular end section (27), coaxial with said tubular wall and having a smaller diameter than the latter, said end section (27) being connectable in reversible fit relationship with a collar (28) on said top wall.

10. A stopper according to Claim 9, characterized in that the central region with convex surface (16) of said top wall (1) is encircled by an annular ridge (29) and said elastic diaphragm (21) is formed with a groove (30) mating with said ridge.

11. A method of manufacturing a stopper as set forth in Claims 1 to 10, characterized in that it comprises the steps of arranging, in an upside down attitude with the opening (7) upwards, the assembly formed of the top wall (1) and the tubular wall (2) as assembled together, depositing a metered amount (32) of a thermoplastic elastomer material in a flowing state over the convex central region (16) of said top wall (1), compression molding of said metered amount of elastomer material against the surfaces (16,18) of said top wall (1) and (13,14,26,27) of said flange (12) of the tubular wall (2) which are facing toward the cavity (7) defined by the tubular wall, with consequent formation of said elastic diaphragm (21), irreversibly and tightly adhering the edge (20) of said diaphragm to said flange (12) only of the tubular wall at least as relates to the flat annular section (13) of said flange, and providing at least one through cut (24) across the diaphragm thus formed in the area thereof juxtaposed to the convex surface (16) of said top wall (1).

12. A method according to Claim 11, characterized in that it includes the step of depositing an adhesion-preventing material (23) over the entire surface (16,18) of said top wall (1) facing the cavity (7) defined by the tubular wall (2), prior to depositing the metered amount (32) of thermoplastic elastomer material.

## Patentansprüche

1. Stopfen für verformbare Behälter, der mit einem Halsstück zur Festlegung einer Öffnung versehen ist, und der von einem Typ ist, der beispielsweise durch Formen aus einem Kunststoffmaterial gebildet ist, mit einer oberen Wand (1) und einer rohrförmigen Wand (2), die hiervon für den Eingriff mit dem Behälterhals ausgeht, wobei die obere Wand mit der rohrförmigen Wand durch reversible Ankopplungsmittel verbunden ist, und der eine Spendervorrichtung in Form einer elastischen Membran (21) mit wenigstens einem Kreuzschnitt aufweist, um eine selbst schließende Ausflußmündung bereitzustellen, die sich bei einem vorbestimmten Druck, der auf den Behälter von außen aufgebracht wird, öffnet, um ein Produkt aus dem Behälterinneren zu spenden, und die sich, wenn solch ein Druck entfernt wird, automatisch schließt, um die Produktabgabe automatisch abzuschneiden, wobei die obere Wand des Stopfens ein tempöräres Abdeckelement für die Spendervorrichtung bereitstellt, dadurch gekennzeichnet, daß die Membran (21) druckdicht und irreversibel mit ihrem am Umfang befindlichen Rand (20) dauerhaft an einem Flansch (12) befestigt ist, der im Inneren der rohrförmigen Wand (2) an deren Ende, das der oberen Wand (1) zugewandt ist, vorgesehen ist und sich auf letztere in lösbarer Art und Weise stützt.

2. Stopfen nach Anspruch 1, dadurch gekennzeichnet, daß die elastische Membran aus einem thermoplastischen Elastomer mit einer Erweichungstemperatur im Bereich von 140°*C* bis 150°*C* hergestellt ist.

3. Stopfen nach Anspruch 2, dadurch gekennzeichnet, daß das thermoplastische Elastomer Styren Butadien ist.

4. Stopfen nach Anspruch 1 bis 3, dadurch gekennzeichnet, daß die obere Wand und die angrenzende rohrförmige Wand aus einem thermoplastischen Polymermaterial gebildet sind, das eine Erweichungstemperatur im Bereich von 190°*C* bis 200°*C* hat.

5. Stopfen nach Anspruch 4, dadurch gekennzeichnet, daß das Polymermaterial Polyethylen hoher Dichte ist.

6. Stopfen nach Anspruch 1 bis 5, dadurch gekennzeichnet, daß die Oberfläche (16) des zentralen Bereichs (15) der oberen Wand, die dem Inneren des Hohlraums (7) zugewandt ist, der durch die hiermit verbundene rohrförmige Wand (2) festgelegt ist, eine konvexe Oberfläche ist.

7. Stopfen nach Anspruch 1 bis 6, dadurch gekennzeichnet, daß der Flansch (12) für die irreversible druckdichte Befestigung des Rands (20) der Membran (21) einen im wesentlichen flachen ringförmigen Abschnitt (13) aufweist, der senkrecht zu der Längsachse (X-X) der rohrförmigen Wand (2) liegt und mit einer Vielzahl von auf dem Umfang liegenden Einschnitten (19) und einem Endabschnitt (14) versehen ist, der zu einer konischen Oberfläche gehört, die sich zu der oberen Wand (1) hin verjüngt.

8. Stopfen nach Anspruch 1 bis 7, dadurch gekennzeichnet, daß die obere Wand einen kegelstumpfförmigen ringförmigen Bereich (17) hat, der sich, wenn die Wand in dem mit der rohrförmigen Wand (2) angekoppelten Zustand ist, in Fortsetzung der konischen Oberfläche des auf dem Flansch liegenden Endabschnitts (14) in Richtung der Verjüngung erstreckt.

9. Stopfen nach Anspruch 1 bis 6, dadurch gekennzeichnet, daß der Flansch für die irreversible, druckdichte Befestigung des Rands (20) der Membran einen im wesentlichen flachen, ringförmigen Abschnitt (13) aufweist, der senkrecht zu der Längsachse (X-X) der rohrförmigen Wand liegt und mit einer Vielzahl von auf dem Umfang liegenden Einschnitten (19), einem Zwischenabschnitt (26), der zu einer konischen Oberfläche gehört, die sich zu der oberen Wand (1) hin verjüngt, und einem rohrförmigen Endabschnitt (27) versehen ist, der koaxial zu der rohrförmigen Wand ist und einen kleineren Durchmesser als letztere hat, wobei der Endabschnitt (27) in reversibler Passungsbeziehung mit einem Kragen (28) auf der oberen Wand verbindbar ist.

10. Stopfen nach Anspruch 9, dadurch gekennzeichnet, daß der zentrale Bereich mit konvexer Oberfläche (16) der oberen Wand (1) von einem ringförmigen Wulst (29) umgeben ist und die elastische Membran (21) mit einer Nut (30) ausgeformt ist, die mit dem Wulst in Eingriff steht.

11. Verfahren zur Herstellung eines Stopfens nach den Ansprüchen 1 bis 10, dadurch gekennzeichnet, daß es die Schritte des Anordnens des aus der oberen Wand (1) und der rohrförmigen Wand (2) gebildeten Aufbaus in zusammengebauten Zustand in Rückenlage, mit der Öffnung (7) nach oben, des Ablagerns einer abgemessenen Menge (32) eines thermoplastischen elastomeren Materials in fließendem Zustand auf dem zentralen Bereich (16) der oberen Wand (1), des Formpressens der abgemessenen Menge elastomeren Materials gegen die Oberflächen (16, 18) der oberen Wand (1) und (13, 14, 26, 27) des Flanschs (12) der rohrförmigen Wand (2), die dem Hohlraum (7), der durch die rohrförmige Wand festgelegt ist, zugewandt sind, mit der folgenden Bildung der elastischen Membran (21) umfasst, wobei der Rand (20) der Membran nur an dem Flansch (12) der rohrförmigen Wand irreversibel und druckdicht anhaftet, wenigstens was den flachen ringförmigen Abschnitt (13) des Flanschs betrifft, und die Anordnung von wenigstens einem Schnitt (24) quer über die Membran aufweist, die auf diese Weise in dem der konvexen Oberfläche (16) der oberen Wand (1) gegenüberliegenden Gebiet ausgebildet ist.

12. Verfahren nach Anspruch 11, dadurch gekennzeichnet, daß es vor dem Ablagern der abgemessenen Menge (32) des thermoplastischen elastomeren Materials den Schritt des Ablagerns eines das Anhaften verhindernden Materials (23) auf der gesamten Oberfläche (16, 18) der oberen Wand (1) aufweist, die dem Hohlraum (7), der durch die rohrförmige Wand (2) festgelegt ist, zugewandt ist.

## Revendications

1. Bouchon pour récipients déformables pourvus d'une partie col déterminant une ouverture, du type moulé en plastique comportant une paroi supérieure (1) et une paroi tubulaire (2) pendant de celle-ci pour venir en prise avec le col du récipient, ladite paroi supérieure étant jointe à la paroi tubulaire par des moyens d'accouplement réversibles, comportant un dispositif distributeur formé d'une membrane élastique (21) ayant au moins une entaille transversale destinée à créer un orifice à fermeture automatique qui s'ouvrira pour l'émission d'un produit de l'intérieur du récipient à l'application d'une pression déterminée à ce dernier de l'extérieur et se fermera pour arrêter automatiquement l'émission de produit à la suppression de cette pression, ladite paroi supérieure du bouchon constituant un élément de couverture temporaire du dispositif distributeur, caractérisé par le fait que ladite membrane (21) est attachée en permanence, avec étanchéité et de manière irréversible, par son bord périphérique (20), à un collet (12) prévu à l'intérieur de la paroi tubulaire (2) du bouchon à l'extrémité de celle-ci faisant face à la paroi supérieure (1) et s'appuie de manière détachable sur cette dernière.

2. Bouchon selon la revendication 1, caractérisé par le fait que la membrane élastique est faite d'un élastomère thermoplastique dont la température de ramollissement est comprise entre 140 et 150 °C.

3. Bouchon selon la revendication 2, caractérisé par le fait que l'élastomère thermoplastique est du styrène-butadiène.

4. Bouchon selon les revendications 1 à 3, caractérisé par le fait que la paroi supérieure et la paroi tubulaire contiguë sont faites d'un polymère thermoplastique dont la température de ramollissement est comprise entre 190 et 200 °C.

5. Bouchon selon la revendication 4, caractérisé par le fait que le polymère est du polyéthylène haute densité.

6. Bouchon selon les revendications 1 à 5, caractérisé par le fait que la surface (16) de la région centrale (15) de la paroi supérieure (1) faisant face à l'intérieure de la cavité (7) délimitée par la paroi tubulaire (2) jointe à celle-ci est une surface convexe.

7. Bouchon selon les revendications 1 à 6, caractérisé par le fait que le collet (12) pour la fixation étanche irréversible du bord (20) de la membrane (21) comprend une partie annulaire sensiblement plate (13) perpendiculaire à l'axe longitudinal (X-X) de la paroi tubulaire (2) et pourvue d'une série d'entailles disposées circonférentiellement (19) et une partie d'extrémité (14) qui appartient à une surface conique s'effilant vers la paroi supérieure (1).

8. Bouchon selon les revendications 1 à 7, caractérisé par le fait que la paroi supérieure a une région annulaire tronconique (17) qui, lorsque cette paroi est jointe à la paroi tubulaire (2), s'étend dans le prolongement de la surface conique de la partie d'extrémité (14) du collet dans la direction d'effilement.

9. Bouchon selon les revendications 1 à 6, caractérisé par le fait que le collet pour la fixation étanche irréversible du bord (20) de la membrane comprend une partie annulaire sensiblement plate (13) perpendiculaire à l'axe longitudinal (X-X) de la paroi tubulaire et pourvue d'une série d'entailles disposées circonférentiellement (19), une partie intermédiaire (26) appartenant à une surface conique s'effilant vers la paroi supérieure (1) et une partie d'extrémité tubulaire (27) coaxiale avec la paroi tubulaire et de plus petit diamètre que celle-ci, cette partie d'extrémité (27) pouvant être jointe avec ajustement réversible à une collerette (28) de la paroi supérieure.

10. Bouchon selon la revendication 9, caractérisé par le fait que la région centrale à surface convexe (16) de la paroi supérieure (1) est entourée d'une crête annulaire (29) et la membrane élastique (21) est pourvue d'une gorge (30) qui épouse cette crête.

11. Procédé de fabrication d'un bouchon selon les revendications 1 à 10, caractérisé par le fait qu'il comprend les opérations suivantes : mise la tête en bas, avec l'ouverture (7) en haut, de l'ensemble formé de la paroi supérieure (1) et la paroi tubulaire (2) assemblées, dépôt d'une quantité dosée (32) d'un élastomère thermoplastique, à l'état fluide, sur la région centrale convexe (16) de la paroi supérieure (1), moulage par compression de cette quantité dosée d'élastomère contre les surfaces (16,18) de la paroi supérieure (1) et (13,14,26,27) du collet (12) de la paroi tubulaire (2) qui sont dirigées vers la cavité (7) délimitée par la paroi tubulaire, avec formation résultante de la membrane élastique (21), collage irréversible et étanche du bord (20) de la membrane au collet (12) seulement de la paroi tubulaire au moins en ce qui concerne la partie annulaire plate (13) de ce collet, et réalisation d'au moins une entaille traversante (24) en travers de la membrane ainsi formée dans la zone de celle-ci juxtaposée à la surface convexe (16) de la paroi supérieure (1).

12. Procédé selon la revendication 11, caractérisé par le fait qu'il comporte l'opération de dépôt d'une matière antiadhérente (23) sur toute la surface (16,18) de la paroi supérieure (1) faisant face à la cavité (7) délimitée par la paroi tubulaire (2), ce avant le dépôt de la quantité dosée (32) d'élastomère thermoplastique.
